# EUROPEAN PATENT SPECIFICATION

(11) **EP 3 991 881 B1**
(45) Date of publication and mention of the grant of the patent: **07.06.2023**
(21) Application number: 21204131.3
(22) Date of filing: 22.10.2021
(51) Int. Cl.: B22F 5/00, B22F 10/64, B33Y 40/20, B33Y 70/00, B33Y 80/00, C22C 1/04, C22C 19/07, C22C 30/00, C22F 1/00, C22F 1/10

(54) **CO-FE-NI ALLOY WITH HIGH THERMAL CONDUCTIVITY AND HIGH STRENGTH FOR MOLD AND ADDITIVE MANUFACTURING METHOD THEREOF**
CO-FE-NI-LEGIERUNG MIT HOHER WÄRMELEITFÄHIGKEIT UND HOHER FESTIGKEIT FÜR GIESSFORM UND GENERATIVES FERTIGUNGSVERFAHREN DAFÜR
ALLIAGE CO-FE-NI À CONDUCTIVITÉ THERMIQUE ÉLEVÉE ET À GRANDE RÉSISTANCE POUR MOULE ET SON PROCÉDÉ DE FABRICATION ADDITIVE

(30) Priority: 27.10.2020 CN 202011161642
(43) Date of publication of application: 04.05.2022
(73) Proprietor: Shanghai Jiao Tong University, Shanghai 200240 (CN); Shanghai ESU Laser Technology Co., Ltd., Tinglin Town, Jinshan District Shanghai 201505 (CN)
(72) Inventor: LIU, Qingdong, Shanghai, 200240 (CN); ZHANG, Yixiao, Shanghai, 200240 (CN); WANG, Lijun, Shanghai, 200240 (CN); GU, Jianfeng, Shanghai, 200240 (CN)
(74) Representative: Strych, Sebastian

(56) References cited:
- CN-A- 109 972 019
- CN-A- 110 860 687
- US-A1- 2019 127 828

## Description

### TECHNICAL FIELD

The present disclosure relates to an alloy for additive manufacturing of a mold, and in particular to a Co-Fe-Ni alloy with high thermal conductivity and high strength for a mold and an additive manufacturing method thereof.

### BACKGROUND ART

The high-end mold manufacturing reflects a country's industrial capabilities. China is a major mold consumer, rather than a strong manufacturing country. Some domestic molds have unstable performance, low reliability and limited service life, resulting in most high-end molds still depending on imports. Therefore, it is extremely urgent to solve this troublesome issue of high-end mold manufacturing in China, and develop related advanced alloys and corresponding manufacturing technologies with independent intellectual property rights. In addition, with the rapid development of the additive manufacturing technology, the conventional manufacturing methods of mold comprising melting, forging, heat treatment, machining, and surface treatment have been changed, mainly reflected in the shortening of manufacturing process, "free design" of the mold cavity, and unique mechanical properties and fatigue life of the mold given by the additive manufacturing itself, which greatly reduces the need for the cost control of the material itself, allowing for a new understanding and thinking for selection and cost control of material. In other words, as long as the additive manufacturing could meet the performance requirements of molds, it is possible to try the large-scale production and application of the corresponding molds, in which the cost of materials (such as the alloy element added) and manufacture (such as heat treatment) may be minimized due to the advantages of additive manufacturing. Thus, the additive manufacturing is especially applicable to some injection molds with a small size but complex cavity. At present, mold steels that are suitable for additive manufacturing and have been applied on a large scale mainly include alloy steels such as 18Ni300 and 420, which could meet the requirements in terms of strength, toughness and plasticity, polishing performance, cutting performance, fatigue performance and corrosion resistance, but their thermal conductivity and closely related thermal fatigue performance still need to be improved.

Chinese patent CN109972019A discloses a medium-entropy alloy for additive manufacturing, comprising Cr, Co and Ni, wherein Cr, Co and Ni each has an atomic percentage of 20 % to 50 %, and the sum of the atomic percentages adds up to 100 %. The present applicant has found that said medium-entropy alloy for additive manufacturing has a relatively strict equiatomic ratio, and in this patent, the solid solution strengthening effect and "diffusion resistance" effect of the pseudo medium-entropy alloy are utilized, and no mesophase is formed, resulting in that its strength and fatigue life fails to meet the use requirements of molds. The present disclosure is directed to a pseudo medium-entropy alloy, not being designed with an equiatomic ratio. In addition to the solid solution strengthening effect and "diffusion resistance" effect, the medium-entropy alloy includes a Ni-rich precipitate phase formed during tempering, thereby greatly improving the strength and fatigue life.

CN110860687A discloses a powder steel for 3D printing and preparation method thereof, in which the powder steel for 3D printing comprises the following chemical components in percentage by weight: 15.0-17.0 % of Ni, 35-45 % of Co, 0.002-0.3 % of Mo, 0.8-2.0 % of Pb, not greater than 0.03 % of P, not greater than 0.03% of S, and the balance of Fe.

In view of the above, they are of great significance for solving the technical troublesome issue in the field of high-end molds and promoting their domesticalization to develop a Co-Fe-Ni alloy with high thermal conductivity, high strength and low constituent for high-end molds, and develop and define the corresponding additive manufacturing and subsequent heat treatment methods to improve its microstructure and mechanical properties.

### SUMMARY

In order to overcome the above defects of the prior art, the present disclosure provides a Co-Fe-Ni alloy with high thermal conductivity and high strength for a mold and an additive manufacturing method thereof. In the present disclosure, a Co-based pseudo medium-entropy alloy is applied to a mold, and then rare earth elements such as palladium or/and scandium, yttrium, and neodymium are added thereto, different toughness combinations are obtained by using additive manufacturing and controlling subsequent heat treatment. On the basis of this, the alloy according to the present disclosure exhibits improved thermal conductivity, reliability and service life on the premise of not significantly increasing the cost while maintaining mechanical properties of the existing mold steel, and may replace part of the existing mold steel used in molds, which has considerable economic benefits.

The object of the present disclosure is achieved by the following technical solutions:

A first aspect of the present disclosure provides a Co-Fe-Ni alloy with high thermal conductivity and high strength for a mold, comprising the following chemical components in percentage by weight: 0-0.01 % of C, 12-18 % of Ni, 38-42 % of Fe, 0-1.2 % of Cr, 0-0.05 % of X, less than 0.015 % of P, less than 0.010 % of S, and the balance of Co and inevitable impurities, wherein X is Sc, and/or Y, and/or Nd, and/or Pd.

In some embodiments, the Co-Fe-Ni alloy comprises the following chemical components in percentage by weight: 0-0.01 % of C, 12-15 % of Ni, 38-42 % of Fe, 0-1.2 % of Cr, 0.005-0.05 % of X, less than 0.015 % of P, less than 0.010 % of S, and the balance of Co and inevitable impurities, wherein X is Sc, and/or Y, and/or Nd, and/or Pd.

In some embodiments, the X is Pd.

In the present disclosure, Ni is mainly used to form a precipitate phase to improve the strength of the alloy, and Sc, Y, Nd and Pd are mainly used to refine grains and control the size and distribution of the precipitate phase.

In some embodiments, the additive manufacturing is conducted using a spherical powder alloy, wherein the spherical powder alloy has a fine-grained martensite structure, and a particle size of 10 to 85 µm in a normal distribution.

In some embodiments, the spherical powder alloy with a fine-grained martensite structure is obtained by cooling a high-temperature molten alloy to ambient temperature by gas atomization, and subjecting the alloy after being cooled to a liquid-solid phase transformation (solidification) and a solid phase transformation.

A second aspect of the present disclosure provides an additive manufacturing method of the Co-Fe-Ni alloy with high thermal conductivity and high strength for a mold, comprising:
step 1, preparing a spherical powder alloy with a particle size of 10-85 µm in a normal distribution and a fine-grained martensite structure;
step 2, printing the spherical powder alloy into a predetermined mold by means of additive manufacturing; and
step 3, tempering the printed predetermined mold obtained in step 2 at a temperature of 470-530 °C for 1-6 h, and cooling in air to obtain a mold in a final performance state.

The X (X is Sc, and/or Y, and/or Nd, and/or Pd) element in the alloy according to the present disclosure may influence the solidification rate and temperature gradient of metals to control the additive manufactured microstructure, and control the growth rate and stability of Ni-rich precipitate phase during tempering, thereby improving properties such as strength and thermal fatigue.

In some embodiments, in step 2, printing the spherical powder alloy into a predetermined mold is conducted by means of laser powder bed (LPB) or laser powder fed (LPF) additive manufacturing under the conditions: a laser power of 70-2200 W, a scanning rate of 0.2-1.5 m/s, a powder-bed thickness of 22-165 µm, and a laser power density of 58-268 J/mm³.

In some embodiments, the printed predetermined mold may be subjected to any of the following treatments before tempering:
(i) heating the printed predetermined mold to a temperature of 820-1000 °C, subjecting the resulting mold to a solution treatment at the temperature for 0.5-3 h, and then cooling to ambient temperature by water cooling or at a cooling rate higher than 15 °C/s;
(ii) heating the printed predetermined mold to 650-760 °C, subjecting the resulting mold to a critical tempering in two-phase area for 1-3 h, and then cooling to ambient temperature by water cooling or at a cooling rate higher than 15°C/s.

In some embodiments, after directly tempering the printed predetermined mold, the printed predetermined mold has a microstructure that is a layered structure composed of alternate cellular grains and columnar grains. In this case, tempering does not change the overall morphology of the initial printed microstructure, but allows eliminating potential stress caused by rapid cooling during the additive manufacturing, and forming a Ni-rich precipitate phase, which not only improves strength, but also improves toughness and thermal fatigue property.

In some embodiments, after subjecting the printed predetermined mold to the solution treatment and the tempering in sequence, the printed predetermined mold has a microstructure at ambient temperature that is equiaxed grains, which is similar to a microstructure of the conventional as-cast alloy after a heat treatment. In this case, the introduced solution treatment results in completely changing the overall morphology of the initial printed microstructure, losing the fine-grained structure and strength contribution brought by additive manufacturing, but simultaneously completely eliminating the printing stress, and improving the machinability performance. Furthermore, the Ni-rich precipitate phase formed during tempering may still produce a significant precipitation strengthening effect to ensure the strength.

In some embodiments, after subjecting the printed predetermined mold to the critically tempered in two-phase area and the tempering in sequence, the printed predetermined mold has a microstructure at ambient temperature of a layered structure composed of alternate γ phase dispersed cellular grains and columnar grains, wherein a volume fraction of the γ phase is in the range of 3-25 %, which first increases and then decreases with the increase of a critical tempering temperature. In this case, the introduced critical tempering in two-phase area does not completely change the overall morphology of the initial printed microstructure, but results in the formation of a γ phase with toughening effect at the grain boundary between the fine cellular grains and columnar grains, which greatly improves the toughness and processing property of the alloy. Furthermore, a certain amount of a Ni-rich precipitate phase is formed during the tempering, to improve and ensure the required strength.

In some embodiments, a strength of the mold in a final performance state mainly stems from a dispersed Ni-rich precipitate phase formed during the tempering, and the dispersed Ni-rich precipitate phase has a volume fraction of 12-30 %, and is in platelike shape and vertically distributed with each other, and has a composition of 48-55% of Ni, 25-28% of Co, and 20-25% of Fe in percentage by weight.

In some embodiments, in addition to the dispersion strengthening of the Ni-rich precipitate phase, a high content of elements such as Co, Fe and Ni produces a certain solution strengthening effect, which is similar to a solution strengthening effect in a medium-entropy alloy.

In some embodiments, the mold in a final performance state has a hardness of 450-525 HV, a V-notch impact energy of 12.5-46.5 J, and a thermal conductivity of 67-82 W/m·K.

Compared with the prior art, the present disclosure has the following beneficial effects:
1. Using additive manufacturing allows a Co-based pseudo medium-entropy alloy to be applied to the mold economically, which makes up for the deficiency of high cost of the alloy itself.
2. On the premise of not significantly increasing the cost and maintaining the mechanical properties of the existing mold steel, the addition of rare earth elements such as palladium or/and scandium, yttrium, and neodymium could improve the thermal conductivity, reliability and service life of the alloy.
3. Different high toughness combinations of additive manufactured alloys are obtained by controlling heat treatment, meeting the requirements of mechanical properties in different service environments.
4. The Co-Fe-Ni alloy with high thermal conductivity and high strength according to the present disclosure may replace part of the existing mold steel, having considerable economic benefits.

### BRIEF DESCRIPTION OF THE DRAWINGS

FIG. 1 shows curves of hardness of an as-cast Co-Fe-Ni alloy and the printed Co-Fe-Ni alloy versus tempering temperature.
FIG. 2 shows a metallographic microstructure morphology (panel (a)) and a scanning electron microscope (SEM) microstructure morphology (panel (b)) of the printed Co-Fe-Ni alloy after a tempering at 525 °C according to Example 1.
FIG. 3 shows a metallographic microstructure morphology of the printed Co-Fe-Ni alloy after a solution treatment at 900 °C and a tempering at 525 °C according to Example 2.
FIG. 4 shows an electron backscattered diffraction (EBSD) microstructure morphology of the printed Co-Fe-Ni alloy after a critical tempering in two-phase area at 700 °C and a tempering at 525 °C according to Example 3.
FIG. 5 shows a Ni-rich precipitate phase formed during tempering the printed Co-Fe-Ni alloy at 525 °C according to Example 1, in which panel (a) shows a three-dimensional (3D) distribution of Ni element obtained by an atom probe, panel (b) shows a Ni-rich precipitate phase outlined by an equal concentration surface of 20 at.% Ni atom, and panel (c) shows the change of atomic concentration near the interface between the Ni-rich precipitate phase and the matrix.
FIG. 6 shows a curve of thermal conductivity of the printed Co-Fe-Ni alloy versus temperature.

### DETAILED DESCRIPTION OF THE EMBODIMENTS

The present disclosure will be illustrated in detail below in combination with the drawings and specific Examples.

In the following examples, yield strength, tensile strength, and elongation are determined by ASTM E8, V-notch impact energy at ambient temperature is determined by ASTM E23, particle size of a spherical powder is determined by statistics from an scanning electron microscopy (SEM) microstructure image, volume fraction of γ phase is determined by an electron backscattered diffraction microstructure (EBSD) image, volume fraction of Ni-rich precipitate phase and percentage by weight of the components thereof are determined by atom probe tomography (ATP), hardness is determined by a microhardness measurement system HM2000, and the thermal conductivity is determined by a laser thermal diffusion instrument DLF1600.

### Example 1

### Component: Co-40.88Fe-15.94Ni(wt.%)

Process: preparing a powder + printing (at a laser power of 130 W, a scanning rate of 0.72 m/s, and a layer thickness of 38 µm) + tempering at 525 °C for 2 h.

Printing quality: a porosity of 0.19 % and a density of 99.39 %.

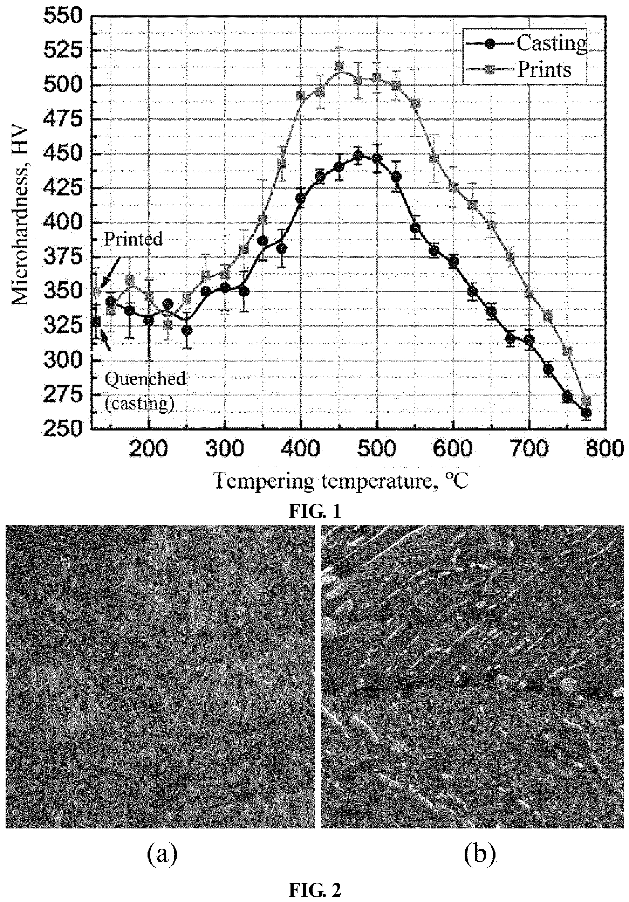

Microstructure: a layered structure composed of alternate cellular grains and columnar grains as shown in FIG. 2.

Mechanical properties: a yield strength of 1210 MPa, a tensile strength of 1420 MPa, an elongation of 6.7 %, and a V-notch impact energy at ambient temperature of 10.5 J.

This Example was specified as follows:
A Co-Fe-Ni alloy with high thermal conductivity and high strength for a mold consisted of the following chemical components in percentage by weight:
40.88 % of Fe, 15.94 % of Ni, less than 0.015 % of P, less than 0.010 % of S, and the balance of Co and inevitable impurities.

An additive manufacturing method of the Co-Fe-Ni alloy with high thermal conductivity and high strength for a mold was conducted as follows:
Step 1, a high-temperature molten alloy consisting of components according to the above ratio was cooled to ambient temperature by gas atomization, and subjected to a liquid-solid phase transformation (solidification) and a solid phase transformation, obtaining a spherical powder having a fine-grained martensite structure and a particle size of 10-85 µm in a normal distribution.
Step 2, the spherical powder was printed into a predetermined mold by a laser powder bed (LPB) additive manufacturing method under conditions of a laser power of 130 W, a scanning rate of 0.72 m/s, and a bed layer thickness of 38 µm.
Step 3, the printed predetermined mold obtained in step 2 was tempered at 525 °C for 2 h, and cooled in air, obtaining a mold in a final performance state.

As shown in panels (a) and (b) of FIG. 2, the mold in a final performance state according to Example 1 has a microstructure that is a layered structure composed of alternate cellular grains and columnar grains.

The sample prepared in this example was subjected to mechanical properties tests by conventional tensile and impact test methods, and the results show that the sample has a yield strength of 1210 MPa, a tensile strength of 1420 MPa, an elongation of 6.7 %, and a V-notch impact energy at ambient temperature of 10.5 J.

FIG. 1 shows curves of hardness of the printed Co-Fe-Ni alloy according to Example 1 and an as-cast alloy with corresponding components versus tempering temperature, in which the as-cast alloy was processed by quenching and tempering, wherein the quenching was conducted at 900 °C for 1 h, and then cooled to ambient temperature by water, and the tempering was consistent with the tempering treatment of the printed Co-Fe-Ni alloy according to Example 1. It can be seen from FIG. 1 that compared with the as-cast alloy, the printed Co-Fe-Ni alloy in Example 1 has higher hardness, showing obvious advantages.

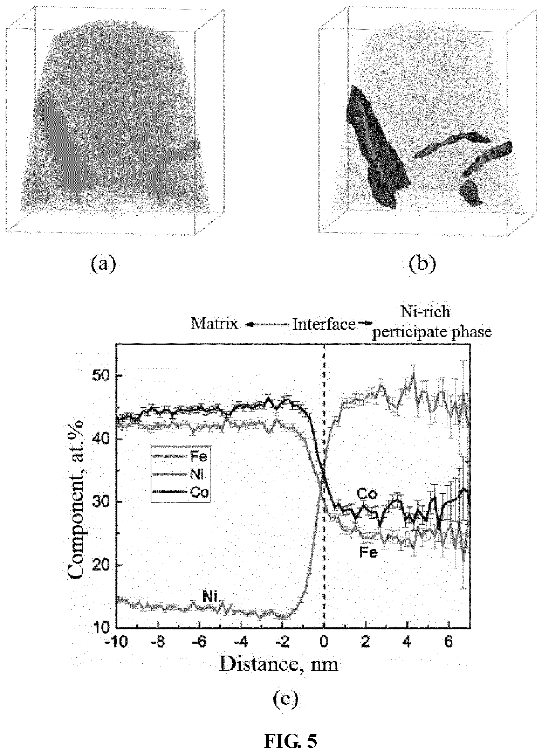

FIG. 5 shows a Ni-rich precipitate phase formed during tempering the printed Co-Fe-Ni alloy at 525 °C in Example 1, in which panel (a) shows a 3D distribution of Ni element obtained by an atom probe, panel (b) shows a Ni-rich precipitate phase outlined by an equal concentration surface of 20 at.% Ni atoms, and panel (c) shows a change of atomic concentration near the interface between the Ni rich precipitate phase and the matrix. It is confirmed in FIG. 5 that a Ni-rich precipitate phase has appeared, which is different from a medium-entropy alloy.

### Example 2

### Component: Co-40.88Fe-15.94Ni(wt.%)

Process: preparing a powder + printing (at a laser power of 130 W, a scanning rate of 0.72 m/s, a layer thickness of 38 µm) + a solution treatment at 900 °C for 1 h-quenching + tempering at 525 °C for 2 h.

Printing quality: a porosity of 0.19 %, a density of 99.39 %.

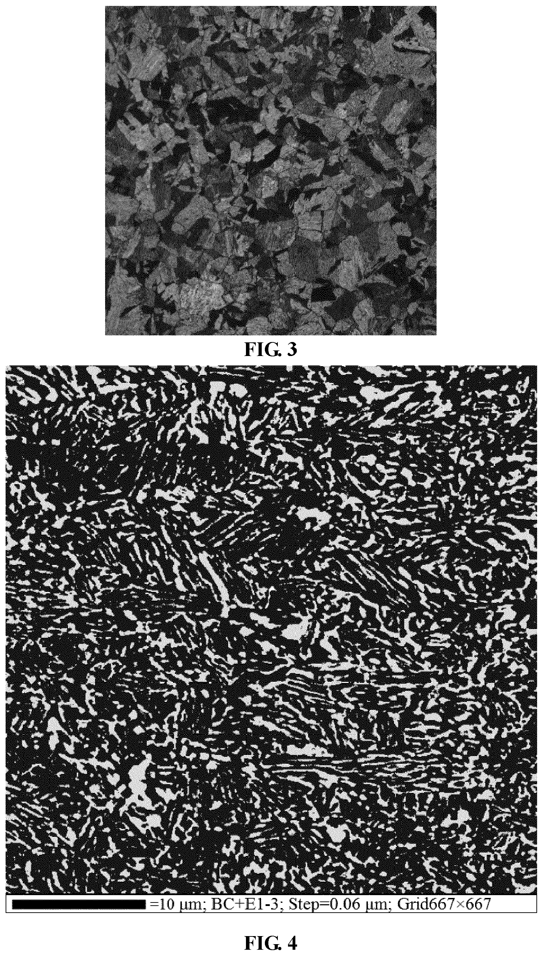

Microstructure: an equiaxed grain structure as shown in FIG. 3.

Mechanical properties: a yield strength of 1020 MPa, a tensile strength of 1220 MPa, an elongation of 6.2 %, and a V-notch impact energy at ambient temperature of 18.3 J.

This Example was specified as follows:
A Co-Fe-Ni alloy with high thermal conductivity and high strength for a mold consisted of the following chemical components in percentage by weight:
40.88 % of Fe, 15.94 % of Ni, less than 0.015 % of P, less than 0.010 % of S, and the balance of Co and inevitable impurities.

An additive manufacturing of the Co-Fe-Ni alloy with high thermal conductivity and high strength for a mold was conducted as follows:
Step 1, a high-temperature molten alloy consisting of components according to the above ratio was cooled to ambient temperature by gas atomization, and subjected to a liquid-solid phase transformation (solidification) and a solid phase transformation, obtaining a spherical powder having a fine-grained martensite structure and a particle size of 10-85 µm in a normal distribution.
Step 2, the spherical powder was printed into a predetermined mold by a a laser powder bed (LPB) additive manufacturing method under conditions of a laser power of 130 W, a scanning rate of 0.72 m/s, and a bed layer thickness of 38 µm.
Step 3, the printed predetermined mold was heated to 900 °C and subjected to a solution treatment at 900 °C for 2 h, and then cooled to ambient temperature by water.
Step 4, the predetermined mold after the solution treatment was tempered at 525 °C for 2 h, and cooled by air, obtaining a mold in a final performance state.

As shown in FIG. 3, the mold in a final performance state according to this example has a microstructure that is an equiaxed grain structure, which is similar to that of a as-cast alloy.

The sample prepared in this example was subjected to mechanical properties tests by conventional tensile and impact test methods, and the results show that it has a yield strength of 1020 MPa, a tensile strength of 1220 MPa, an elongation of 6.2 %, and a V-notch impact energy at ambient temperature of 18.3 J.

### Example 3

### Component: Co-40.88Fe-15.94Ni (wt.%)

Process: preparing a powder + printing (at a laser power of 130 W, a scanning rate of 0.72 m/s, a layer thickness of 38 µm) + critical tempering in two-phase area at 700 °C for 1 h - quenching + tempering at 525 °C for 2 h.

Printing quality: a porosity of 0.19%, a density of 99.39 %.

Microstructure: a layered structure composed of alternate γ phase dispersed cellular grains and columnar grains as shown in FIG. 4.

Mechanical properties: a yield strength of 976 MPa, a tensile strength of 1090 MPa, an elongation of 10.5 %, and a V-notch impact energy at ambient temperature of 46.6 J.

This Example was specified as follows:
A Co-Fe-Ni alloy with high thermal conductivity and high strength for a mold consisted of the following chemical components in percentage by weight:
40.88 % of Fe, 15.94 % of Ni, less than 0.015 % of P, less than 0.010 % of S, and the balance of Co and inevitable impurities.

An additive manufacturing of the Co-Fe-Ni alloy with high thermal conductivity and high strength for a mold was conducted as follows:
Step 1: a high-temperature molten alloy consisting of components according to the above ratio was cooled to ambient temperature by gas atomization, and subjected to a liquid-solid phase transformation (solidification) and a solid phase transformation, obtaining a spherical powder having a fine-grained martensite structure and a particle size of 10-85 µm in a normal distribution.
Step 2: the spherical powder alloy was printed into a predetermined mold by a laser powder bed (LPB) additive manufacturing method under conditions of a laser power of 130 W, a scanning rate of 0.72 m/s, and a bed layer thickness of 38 µm.
Step 3: the printed predetermined mold in the printed state was heated to 700 °C and subjected to a critical tempering in two-phase area at 700 °C for 1 h for a solution treatment, and then cooled to ambient temperature by water.
Step 4: the printed predetermined mold after the critical tempering in two-phase area was tempered at 525 °C for 2 h and cooled by air, obtaining a mold in a final performance state.

As shown in FIG. 4, the mold in a final performance state according to this example has a microstructure that is a layered structure composed of alternate γ phase dispersed cellular grains and columnar grains.

The sample prepared in this example was subjected to mechanical properties tests by conventional tensile and impact test methods, and the results show that it has a yield strength of 976 MPa, a tensile strength of 1090 MPa, an elongation of 10.5 %, and a V-notch impact energy at ambient temperature of 46.6 J.

### Example 4

### Component: Co-40.15Fe-15.07Ni-0.04Pd (wt.%)

Process: preparing a powder + printing (at a laser power of 135 W, a scanning rate of 0.70 m/s, a layer thickness of 38 µm) + tempering at 525 °C for 2 h.

Printing quality: a porosity of 0.09 %, a density of 99.89 %.

Microstructure: a layered structure composed of alternate cellular grains and columnar grains, the characteristics of which are similar to those of the mold in Example 1
Mechanical properties: a yield strength of 1286 MPa, a tensile strength of 1491 MPa, an elongation of 9.5 %, and a V-notch impact energy at ambient temperature of 17.3 J.

This Example was specified as follows:
A Co-Fe-Ni alloy with high thermal conductivity and high strength for a mold consisted of the following chemical components in percentage by weight:
40.15 % of Fe, 15.07 % of Ni, 0.04 % of Pd, less than 0.015 % of P, less than 0.010 % of S, and the balance of Co and inevitable impurities.

An additive manufacturing method of the Co-Fe-Ni alloy with high thermal conductivity and high strength for a mold was conducted as follows:
Step 1, a high-temperature molten alloy consisting of components according to the above ratio was cooled to ambient temperature by gas atomization, and subjected to a liquid-solid phase transformation (solidification) and a solid phase transformation, obtaining a spherical powder having a fine-grained martensite structure and a particle size of 10-85 µm in a normal distribution.
Step 2: the spherical powder alloy was printed into a predetermined mold by a laser powder bed (LPB) additive manufacturing method under conditions of a laser power of 135 W, a scanning rate of 0.70 m/s, and a bed layer thickness of 38 µm.
Step3: the printed predetermined mold obtained in step 2 was tempered at 525 °C for 2 h and cooled to ambient temperature by water, obtaining a mold in a final performance state.

The mold in a final performance state according to this example has a microstructure that is a layered structure composed of alternate cellular grains and columnar grains, which is similar to that of the mold in Example 1.

The sample prepared in this example was subjected to mechanical properties tests by conventional tensile and impact test methods, and the results show that the sample has a yield strength of 1286 MPa, a tensile strength of 1491 MPa, an elongation of 9.5 %, and a V-notch impact energy at ambient temperature of 17.3 J.

### Example 5

### Component: Co-40.01Fe-15.27Ni-0.04Sc (wt.%)

Process: preparing a powder + printing (at a laser power of 135 W, a scanning rate of 0.70 m/s, a layer thickness of 38 µm) + tempering at 525 °C for 2 h.

Printing quality: a porosity of 0.08 %, a density of 99.88 %.

Microstructure: a layered structure composed of alternate cellular grains and columnar grains, the characteristics of which are similar to those of the mold in Example 1.

Mechanical properties: a yield strength of 1253 MPa, a tensile strength of 1430 MPa, an elongation of 9.2 %, and a V-notch impact energy at ambient temperature of 16.8 J.

This Example was specified as follows:
A Co-Fe-Ni alloy with high thermal conductivity and high strength for a mold consisted of the following chemical components in percentage by weight:
40.01 % of Fe, 15.27 % of Ni, 0.04 % of Sc, less than 0.015 % of P, less than 0.010 % of S, and the balance of Co and inevitable impurities.

An additive manufacturing of the Co-Fe-Ni alloy with high thermal conductivity and high strength for a mold was conducted as follows:
Step 1, a high-temperature molten alloy consisting of components according to the above ratio was cooled to ambient temperature by gas atomization, and subjected to a liquid-solid phase transformation (solidification) and a solid phase transformation, obtaining a spherical powder having a fine-grained martensite structure and a particle size of 10-85 µm in a normal distribution.
Step 2: the spherical powder alloy was printed into a predetermined mold by a laser powder bed (LPB) additive manufacturing method under conditions of a laser power of 135 W, a scanning rate of 0.70 m/s, and a bed layer thickness of 38 µm.
Step 3: the printed predetermined mold obtained in step 2 was tempered at 525 °C for 2 h, and cooled in air, obtaining a mold in a final performance state.

The mold in a final performance state according to this example has a microstructure that is a layered structure composed of alternate cellular grains and columnar grains, which is similar to that of the mold in Example 1. The sample prepared in this example was subjected to mechanical properties tests, and the results show that the sample has a yield strength of 1253 MPa, a tensile strength of 1430 MPa, an elongation of 9.2 %, and a V-notch impact energy at ambient temperature of 16.8 J.

### Example 6

### Component: Co-40.12Fe-15.11Ni-0.04Y(wt.%)

Process: preparing a powder + printing (at a laser power of 135 W, a scanning rate of 0.70 m/s, a layer thickness of 38 µm) + tempering at 525 °C for 2 h.

Printing quality: a porosity of 0.11 %, a density of 99.80 %.

### Microstructure: a layered structure composed of alternate cellular grains + columnar grains, the characteristics of which are similar to those of the mold in Example 1

Mechanical properties: a yield strength of 1193 MPa, a tensile strength of 1276 MPa, an elongation of 8.7 %, and a V-notch impact energy at ambient temperature of 11.3 J.

This Example was specified as follows:
A Co-Fe-Ni alloy with high thermal conductivity and high strength for a mold consisted of the following chemical components in percentage by weight:
40.12 % of Fe, 15.11 % of Ni, 0.04 % of Y, less than 0.015 % of P, less than 0.010 % of S, and the balance of Co and inevitable impurities.

An additive manufacturing method of the Co-Fe-Ni alloy with high thermal conductivity and high strength for a mold was conducted as follows:
Step 1, a high-temperature molten alloy consisting of components according to the above ratio was cooled to ambient temperature by gas atomization, and subjected to a liquid-solid phase transformation (solidification) and a solid phase transformation, obtaining a spherical powder having a fine-grained martensite structure and a particle size of 10-85 µm in a normal distribution.
Step 2: the spherical powder alloy was printed into a predetermined mold by a laser powder bed (LPB) additive manufacturing method under conditions of a laser power of 135 W, a scanning rate of 0.70 m/s, and a bed layer thickness of 38 µm.
Step 3: the printed predetermined mold obtained in step 2 was tempered at 525 °C for 2 h, and cooled in air, obtaining a mold in a final performance state.

The mold in a final performance state according to Example 1 has a microstructure that is a layered structure composed of alternate cellular grains + columnar grains, which is similar to that of the mold in Example 1. The sample prepared in this example was subjected to mechanical properties tests, and the results show that the sample has a yield strength 1193 MPa, a tensile strength of 1276 MPa, an elongation of 8.7 %, and a V-notch impact energy at ambient temperature of 11.3 J.

### Example 7

### Component: Co-39.05Fe-15.98Ni-0.04Nd (wt.%)

Process: preparing a powder + printing (at a laser power of 135 W, a scanning rate of 0.70 m/s, a layer thickness of 38 µm) + tempering at 525 °C for 2 h.

Printing quality: a porosity of 0.06 %, a density of 99.91%.

Microstructure: a layered structure composed of alternate cellular grains and columnar grains, the characteristics of which are similar to those of the mold in Example 1.

Mechanical properties: a yield strength 1264 MPa, a tensile strength of 1424 MPa, an elongation of 9.3 %, and a V-notch impact energy at ambient temperature of 13.9 J.

This Example was specified as follows:
A Co-Fe-Ni alloy with high thermal conductivity and high strength for a mold consisted of the following chemical components in percentage by weight:
39.05 % of Fe, 15.98 % of Ni, 0.04 % of Nd, less than 0.015 % of P, less than 0.010 % of S, and the balance of Co and inevitable impurities.

An additive manufacturing of the Co-Fe-Ni alloy with high thermal conductivity and high strength for a mold was conducted as follows:
Step1: a high-temperature molten alloy consisting of components according to the above ratio was cooled to ambient temperature by gas atomization, and subjected to a liquid-solid phase transformation (solidification) and a solid phase transformation, obtaining a spherical powder having a fine-grained martensite structure and a particle size of 10-85 µm in a normal distribution.
Step 2: the spherical powder alloy was printed into a predetermined mold by a laser powder bed (LPB) additive manufacturing method under conditions of a laser power of 135 W, a scanning rate of 0.70 m/s, and a bed layer thickness of 38 µm.
Step 3: the printed predetermined mold obtained in step 2 was tempered at 525 °C for 2 h, and cooled by water, obtaining a mold in a final performance state.

The mold in a final performance state according to Example 1 has a microstructure that is a layered structure composed of alternate cellular grains + columnar grains, which is similar to that of the mold in Example 1. The sample prepared in this example was subjected to mechanical properties tests by, and the results show that the sample has a yield strength of 1264 MPa, a tensile strength of 1424 MPa, an elongation of 9.3 %, and a V-notch impact energy at ambient temperature of 13.9 J.

The component, preparation process and mechanical properties of the alloys prepared in Examples 1-7 are shown in Table 1.

**Table 1 Component, preparation processes and mechanical properties of Co-Fe-Ni alloys prepared in Examples 1-7.**

| Example | Components | Processes | Mechanical properties | | | |
|---|---|---|---|---|---|---|
| | | | R_{p0.2}, MPa | Rₘ, MPa | A₅, % | A_{KV}, J |
| 1 | Co-40.88Fe-15.94Ni | Printing + tempering | 1210 | 1420 | 6.7 | 10.5 |
| 2 | Co-40.88Fe-15.94Ni | Printing + solution | 1020 | 1220 | 6.2 | 18.3 |
| | | treatment + tempering | | | | |
| 3 | Co-40.88Fe-15.94Ni | Printing + critical | 976 | 1090 | 10.5 | 46.6 |
| | | tempering + tempering | | | | |
| 4 | Co-40.15Fe-15.07Ni-0.04Pd | Printing + tempering | 1286 | 1491 | 9.5 | 17.3 |
| 5 | Co-40.01Fe-15.27Ni-0.04Sc | Printing + tempering | 1253 | 1430 | 9.2 | 16.8 |
| 6 | Co-40.12Fe-15.11Ni-0.04Y | Printing + tempering | 1193 | 1276 | 8.7 | 11.3 |
| 7 | Co-39.05Fe-15.98Ni-0.04Nd | Printing + tempering | 1264 | 1424 | 9.3 | 13.9 |

| | | | | | | |
|---|---|---|---|---|---|---|
| Note: R_{p0.2} refers to yield strength, Rₘ refers to tensile strength, A₅ refers to elongation, and A_{KV} refers to impact energy at ambient temperature. | | | | | | |

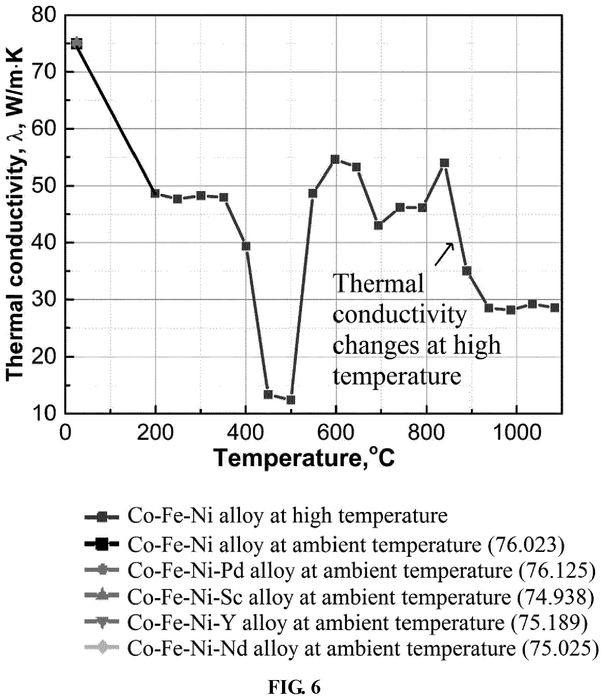

FIG. 6 shows curve of thermal conductivity of the printed Co-Fe-Ni alloy versus temperature. It can be seen from FIG. 6 that the thermal conductivity fluctuates with the increase of temperature, which reflects the phase transformation of the alloy and changes of related physical properties. Although the thermal conductivity of the printed Co-Fe-Ni alloy is lower than 55 W/mK in the high temperature stage (≥200 °C), that at ambient temperature is as high as 75 W/mK, which is far higher than that of the conventional alloy steel for molds. Furthermore, after adding trace rare earth elements or Pd, the thermal conductivity of the resulting alloy is substantially unchanged.

### Example 8

This Example is substantially the same as Example 1, except that, in this Example, the tempering in step 3 was conducted at 470 °C for 6 h.

### Example 9

This Example is substantially the same as Example 1, except that, in this Example, the tempering in S3 was conducted at 530 °C for 1 h.

### Example 10

This Example is substantially the same as Example 2, except that, in this Example, the solution treatment was conducted at 820 °C for 3 h.

### Example 11

This Example is substantially the same as Example 2, except that, in this Example, the solution treatment was conducted at 1000 °C for 0.5 h.

### Example 12

This Example is substantially the same as Example 2, except that, in this Example, the printed predetermined mold after the solution treatment was cooled to ambient temperature at a cooling rate higher than 15 °C/s.

### Example 13

This Example is substantially the same as Example 3, except that, in this Example, the critical tempering in two-phase area was conducted at 650 °C for 3 h.

### Example 14

This Example is substantially the same as Example 3, except that, in this Example, the critical tempering in two-phase area was conducted at 760 °C for 1 h.

### Example 15

This Example is substantially the same as Example 3, except that, in this Example, the printed predetermined mold after the critical tempering in two-phase area was cooled to ambient temperature at a cooling rate higher than 15 °C/s.

### Example 16

In this example, the Co-Fe-Ni alloy with high thermal conductivity and high strength for a mold consisted of the following chemical components in percentage by weight: 12 % of Ni, 42 % of Fe, 0 % of Cr, less than 0.015 % of P, less than 0.010 % of S, and the balance of Co and inevitable impurities. The preparation method of the alloy was conducted with reference to Example 1.

### Example 17

In this example, the Co-Fe-Ni alloy with high thermal conductivity and high strength for a mold consisted of the following chemical components in percentage by weight: 18 % of Ni, 38 % of Fe, 1.2 % of Cr, less than 0.015 % of P, less than 0.010 % of S, and the balance of Co and inevitable impurities. The preparation method of the alloy was conducted with reference to Example 1.

### Example 18

In this example, the Co-Fe-Ni alloy with high thermal conductivity and high strength for a mold consisted of the following chemical components in percentage by weight: 0.01 % of C, 15 % of Ni, 40 % of Fe, 0.5 % of Cr, 0.03 % of Pd, less than 0.015 % of P, less than 0.010 % of S, and the balance of Co and inevitable impurities. The preparation method of the alloy was conducted with reference to Example 1.

### Example 19

In this example, the Co-Fe-Ni alloy with high thermal conductivity and high strength for a mold consists of the following chemical components in percentage by weight: 0.005 % of C, 15 % of Ni, 40 % of Fe, 0.5 % of Cr, 0.03 % of Pd, less than 0.015 % of P, less than 0.010 % of S, and the balance of Co and inevitable impurities. The preparation method of the alloy was conducted with reference to Example 1.

The above embodiments are to help those of ordinary skill in the art to understand and apply the present disclosure. It is obvious for those skilled in the art to make various modifications to these embodiments and apply the general principles described herein to other embodiments without creative work. Therefore, the present disclosure is not limited to the above embodiments. According to the present disclosure, the improvements and modifications made by those skilled in the art without departing from the scope of the present disclosure should be within the protection scope of the present disclosure.

## Claims

1. A Co-Fe-Ni alloy with high thermal conductivity and high strength for a mold, comprising the following chemical components in percentage by weight: 0-0.01 % of C, 12-18 % of Ni, 38-42 % of Fe, 0-1.2 % of Cr, 0-0.05 % of X, less than 0.015 % of P, less than 0.010 % of S, and the balance of Co and inevitable impurities, wherein X is Sc, and/or Y, and/or Nd, and/or Pd.

2. The Co-Fe-Ni alloy with high thermal conductivity and high strength for a mold of claim 1, wherein the Co-Fe-Ni alloy comprises the following chemical components in percentage by weight: 0-0.01 % of C, 12-18 % of Ni, 38-42 % of Fe, 0-1.2 % of Cr, 0.005-0.05 % of X, less than 0.015 % of P, less than 0.010 % of S, and the balance of Co and inevitable impurities, wherein X is Sc, and/or Y, and/or Nd, and/or Pd.

3. The Co-Fe-Ni alloy with high thermal conductivity and high strength for a mold of claim 1 or 2, wherein the X is Pd.

4. The Co-Fe-Ni alloy with high thermal conductivity and high strength for a mold of claim 1 or 2, wherein the Co-Fe-Ni alloy is prepared by an additive manufacturing using a spherical powder alloy, and the spherical powder alloy has a fine-grained martensite structure, and a particle size of 10-85 µm in a normal distribution, as determined by statistics from an scanning electron microscope microstructure image.

5. An additive manufacturing method of the Co-Fe-Ni alloy with high thermal conductivity and high strength for a mold of any one of claims 1 to 4, comprising:
step 1, preparing a spherical powder alloy with a particle size of 10-85 µm in a normal distribution and a fine-grained martensite structure;
step 2, printing the spherical powder alloy into a predetermined mold by means of additive manufacturing; and
step 3, tempering the printed predetermined mold obtained in step 2 at a temperature of 470-530 °C for 1-6 h, and cooling in air to obtain a mold in a final performance state.

6. The additive manufacturing method of claim 5, wherein the printed predetermined mold is subjected to any one of the following treatments before tempering:
(i) heating the printed predetermined mold to a temperature of 820-1000 °C, subjecting the printed predetermined mold to a solution treatment at the temperature for 0.5-3 h, and then cooling to ambient temperature by water cooling or at a cooling rate higher than 15 °C/s; and
(ii) heating the printed predetermined mold to a temperature of 650-760 °C, subjecting the printed predetermined mold to a critical tempering in two-phase area at the temperature for 1-3 h, and then cooling to ambient temperature by water cooling or at a cooling rate higher than 15 °C/s.

7. The additive manufacturing method of claim 5, wherein the printed predetermined mold after directly tempering has a microstructure of a layered structure composed of alternate cellular grains and columnar grains.

8. The additive manufacturing method of claim 6, wherein the printed predetermined mold after the solution treatment and the tempering in sequence has a microstructure at ambient temperature of equiaxed grains, which is similar to the microstructure of a conventional as-cast alloy after heat-treatment;
the printed predetermined mold after the critical tempering in two-phase area and the tempering in sequence has a microstructure at ambient temperature of a layered structure composed of alternate γ phase dispersed cellular grains and columnar grains, wherein the γ phase has a volume fraction of 3-25 %, as determined by an electron backscattered diffraction microstructure image.

9. The additive manufacturing method of claim 5, wherein a strength of the mold in a final performance state mainly stems from a Ni-rich precipitate phase formed during the tempering, wherein the Ni-rich precipitate phase has a volume fraction of 12-30 %, as determined by atom probe tomography, and is in platelike shape and vertically distributed with each other, and has a composition of 48-55% of Ni, 25-28% of Co, and 20-25% of Fe in percentage by weight, as determined by atom probe tomography.

10. The additive manufacturing method of claim 5 or 6, wherein the mold in a final performance state has a hardness of 450-525 HV, a V-notch impact energy of 12.5-46.5 J, and a thermal conductivity of 67-82 W/m·K, wherein the hardness is determined by a microhardness measurement system HM2000, the V-notch impact energy is determined by ASTM E23, and the thermal conductivity is determined by a laser thermal diffusion instrument DLF1600.

## Patentansprüche

1. Co-Fe-Ni-Legierung mit hoher Wärmeleitfähigkeit und hoher Festigkeit für eine Gießform, umfassend die folgenden chemischen Bestandteile: zu 0-0,01 Gew.-% C, zu 12-18 Gew.-% Ni, zu 38-42 Gew.-% Fe, zu 0-1,2 Gew.-% Cr, zu 0-0,05 Gew.-% X, zu weniger als 0,015 Gew.-% P, zu weniger als 0,010 Gew.-% S und als Rest Co und unvermeidliche Verunreinigungen, wobei X für Sc und/oder Y und/oder Nd und/oder Pd steht.

2. Co-Fe-Ni-Legierung mit hoher Wärmeleitfähigkeit und hoher Festigkeit für eine Gießform nach Anspruch 1, wobei die Co-Fe-Ni-Legierung die folgenden chemischen Bestandteile umfasst: zu 0-0,01 Gew.-% C, zu 12-18 Gew.-% Ni, zu 38-42 Gew.-% Fe, zu 0-1,2 Gew.-% Cr, zu 0,005-0,05 Gew.-% X, zu weniger als 0,015 Gew.-% P, zu weniger als 0,010 Gew.-% S und als Rest Co und unvermeidliche Verunreinigungen, wobei X für Sc und/oder Y und/oder Nd und/oder Pd steht.

3. Co-Fe-Ni-Legierung mit hoher Wärmeleitfähigkeit und hoher Festigkeit für eine Gießform nach Anspruch 1 oder 2, wobei das X für Pd steht.

4. Co-Fe-Ni-Legierung mit hoher Wärmeleitfähigkeit und hoher Festigkeit für eine Gießform nach Anspruch 1 oder 2, wobei die Co-Fe-Ni-Legierung durch eine generative Fertigung unter Verwendung einer Legierung von kugeligem Pulver hergestellt wird, und die Legierung von kugeligem Pulver eine feinkörnige Martensitstruktur und eine Teilchengröße von 10-85 µm in einer Normalverteilung, bestimmt mittels Statistik aus einer Mikrostrukturaufnahme eines Rasterelektronenmikroskops, aufweist.

5. Verfahren zur generativen Fertigung der Co-Fe-Ni-Legierung mit hoher Wärmeleitfähigkeit und hoher Festigkeit für eine Gießform nach einem der Ansprüche 1 bis 4, umfassend:
Schritt 1, Herstellen einer Legierung von kugeligem Pulver mit einer Teilchengröße von 10-85 µm in einer normalen Verteilung und einer feinkörnigen Martensitstruktur;
Schritt 2, Drucken der Legierung von kugeligem Pulver zu einer vorbestimmten Gießform mittels generativer Fertigung; und
Schritt 3, Wärmebehandeln der in Schritt 2 erhaltenen gedruckten vorbestimmten Gießform bei einer Temperatur von 470-530 °C für 1-6 h und Abkühlen an der Luft, um eine Gießform in einem Endleistungszustand zu erhalten.

6. Verfahren zur generativen Fertigung nach Anspruch 5, wobei die gedruckte vorbestimmte Gießform vor dem Wärmebehandeln einer beliebigen der folgenden Behandlungen ausgesetzt wird:
(i) Erwärmen der gedruckten vorbestimmten Gießform auf eine Temperatur von 820-1000 °C, Aussetzen der gedruckten vorbestimmten Gießform gegenüber einer Lösungsbehandlung bei der Temperatur für 0,5-3 h und anschließend Abkühlen auf Umgebungstemperatur durch Wasserkühlung oder bei einer Kühlgeschwindigkeit von mehr als 15 °C/s; und
(ii) Erwärmen der gedruckten vorbestimmten Gießform auf eine Temperatur von 650-760 °C, Aussetzen der gedruckten vorbestimmten Gießform gegenüber einem kritischen Wärmebehandeln im Zweiphasenbereich bei der Temperatur für 1-3 h und anschließend Abkühlen auf Umgebungstemperatur durch Wasserkühlung oder bei einer Kühlgeschwindigkeit von mehr als 15 °C/s.

7. Verfahren zur generativen Fertigung nach Anspruch 5, wobei die gedruckte vorbestimmte Gießform nach direktem Wärmebehandeln eine Mikrostruktur einer geschichteten Struktur aufweist, die aus sich abwechselnden zellförmigen Körnern und säulenförmigen Körnern besteht.

8. Verfahren zur generativen Fertigung nach Anspruch 6, wobei die gedruckte vorbestimmte Gießform nach der Lösungsbehandlung und dem Wärmebehandeln nacheinander bei Umgebungstemperatur eine Mikrostruktur von gleichachsigen Körnern aufweist, die ähnlich der Mikrostruktur einer herkömmlichen Legierung im Gusszustand nach der Wärmebehandlung ist;
die gedruckte vorbestimmte Gießform nach dem kritischen Wärmebehandeln im Zweiphasenbereich und dem Wärmebehandeln nacheinander bei Umgebungstemperatur eine Mikrostruktur von einer geschichteten Struktur aufweist, die aus abwechselnden dispergierten zellförmigen und säulenförmigen γ-Phase-Körnern besteht, wobei die γ-Phase einen Volumenanteil von 3-25 %, bestimmt durch ein Elektronenrückstreubeugungsmikrostrukturbild, aufweist.

9. Verfahren zur generativen Fertigung nach Anspruch 5, wobei eine Festigkeit der Gießform in einem Endleistungszustand hauptsächlich aus einer Ni-reichen Niederschlagsphase stammt, die während des Wärmebehandelns gebildet wird, wobei die Ni-reiche Niederschlagsphase einen Volumenanteil von 12-30 %, bestimmt mittels Atomsondentomographie, aufweist und in plättchenförmiger Form vorliegt und vertikal miteinander verteilt ist, und eine Zusammensetzung von 48-55 Gew.-% Ni, 25-28 Gew.-% Co und 20-25 Gew.-% Fe, bestimmt mittels Atomsondentomographie, aufweist.

10. Verfahren zur generativen Fertigung nach Anspruch 5 oder 6, wobei die Gießform in einem Endleistungszustand eine Härte von 450-525 HV, eine V-Kerb-Schlagenergie von 12,5-46,5 J und eine Wärmeleitfähigkeit von 67-82 W/m·K aufweist, wobei die Härte mittels eines Mikrohärtemesssystems HM2000 bestimmt wird, die V-Kerb-Schlagenergie mittels ASTM E23 bestimmt wird und die Wärmeleitfähigkeit mittels eines Laserthermodiffusionsinstruments DLF1600 bestimmt wird.

## Revendications

1. Alliage de Co-Fe-Ni doté d'une conductivité thermique élevée et d'une résistance élevée pour un moule, comprenant les composants chimiques suivants en pourcentage en poids : 0 à 0,01 % de C, 12 à 18 % de Ni, 38 à 42 % de Fe, 0 à 1,2 % de Cr, 0 à 0,05 % de X, moins de 0,015 % de P, moins de 0,010 % de S, et le reste étant Co et des impuretés inévitables, X étant Sc, et/ou Y, et/ou Nd, et/ou Pd.

2. Alliage de Co-Fe-Ni doté d'une conductivité thermique élevée et d'une résistance élevée pour un moule selon la revendication 1, l'alliage de Co-Fe-Ni comprenant les composants chimiques suivants en pourcentage en poids : 0 à 0,01 % de C, 12 à 18 % de Ni, 38 à 42 % de Fe, 0 à 1,2 % de Cr, 0,005 à 0,05 % de X, moins de 0,015 % de P, moins de 0,010 % de S, et le reste étant Co et des impuretés inévitables, X étant Sc, et/ou Y, et/ou Nd, et/ou Pd.

3. Alliage de Co-Fe-Ni doté d'une conductivité thermique élevée et d'une résistance élevée pour un moule selon la revendication 1 ou 2, le X étant Pd.

4. Alliage de Co-Fe-Ni doté d'une conductivité thermique élevée et d'une résistance élevée pour un moule selon la revendication 1 ou 2, l'alliage de Co-Fe-Ni étant préparé par une fabrication additive en utilisant un alliage en poudre sphérique, et l'alliage en poudre sphérique ayant une structure de martensite à grains fins, et une taille de particule de 10 à 85 µm dans une distribution normale, comme déterminée par statistiques à partir d'une image de microstructure au microscope électronique à balayage.

5. Procédé de fabrication additive de l'alliage de Co-Fe-Ni doté d'une conductivité thermique élevée et d'une résistance élevée pour un moule selon l'une quelconque des revendications 1 à 4, comprenant :
étape 1, préparation d'un alliage en poudre sphérique doté d'une taille de particule de 10 à 85 µm dans une distribution normale et d'une structure de martensite à grains fins ;
étape 2, impression de l'alliage en poudre sphérique en un moule prédéterminé au moyen d'une fabrication additive ; et
étape 3, trempe du moule prédéterminé imprimé obtenu dans l'étape 2 à une température de 470 à 530 °C pendant 1 à 6 h, et refroidissement dans l'air pour obtenir un moule dans un état de performance finale.

6. Procédé de fabrication additive selon la revendication 5, le moule prédéterminé imprimé étant soumis à l'un quelconque des traitements suivants avant une trempe :
(i) chauffage du moule prédéterminé imprimé jusqu'à une température de 820 à 1 000 °C, soumission du moule prédéterminé imprimé à un traitement en solution à la température pour 0,5 à 3 h, et ensuite refroidissement jusqu'à la température ambiante par refroidissement à l'eau ou à une vitesse de refroidissement supérieure à 15 °C/s ; et
(ii) chauffage du moule prédéterminé imprimé jusqu'à une température de 650 à 760 °C, soumission du moule prédéterminé imprimé à une trempe critique dans une zone à deux phases à la température pendant 1 à 3 h, et ensuite refroidissement jusqu'à la température ambiante par refroidissement à l'eau ou à une vitesse de refroidissement supérieure à 15 °C/s.

7. Procédé de fabrication additive selon la revendication 5, le moule prédéterminé imprimé, après trempe de manière directe, ayant une microstructure d'une structure stratifiée composée en alternance de grains cellulaires et de grains colonnaires.

8. Procédé de fabrication additive selon la revendication 6, le moule prédéterminé imprimé après le traitement en solution et la trempe en séquence ayant une microstructure à température ambiante de grains équiaxes, qui est similaire à la microstructure d'un alliage coulé conventionnel après traitement thermique ;
le moule prédéterminé imprimé après la trempe critique dans une zone à deux phases et la trempe en séquence ayant une microstructure à température ambiante d'une structure stratifiée composée en alternance de grains cellulaires et de grains colonnaires dispersés dans une phase γ, la phase γ ayant une fraction volumique de 3 à 25 % comme déterminée par une image de microstructure de diffraction rétrodiffusée d'électrons.

9. Procédé de fabrication additive selon la revendication 5, une résistance du moule dans un état de performance finale provenant principalement d'une phase de précipité riche en Ni formée pendant la trempe, la phase de précipité riche en Ni ayant une fraction volumique de 12 à 30 %, comme déterminée par sonde atomique tomographique, et étant sous une forme de type plaque et distribuée verticalement l'une avec l'autre, et ayant une composition de 48 à 55 % de Ni, 25 à 28 % de Co, et 20 à 25 % de Fe en pourcentage en poids, comme déterminée par sonde atomique tomographique.

10. Procédé de fabrication additive selon la revendication 5 ou 6, le moule dans un état de performance finale ayant une dureté de 450 à 525 HV, une énergie d'impact à encoche en V de 12,5 à 46, 5 J, et une conductivité thermique de 67 à 82 W/m·K, la dureté étant déterminée par un système de mesure de microdureté HM2000, l'énergie d'impact à encoche en V étant déterminée selon la norme ASTM E23, et la conductivité thermique étant déterminée par un instrument de diffusion thermique laser DLF1600.
